# EUROPÄISCHE PATENTSCHRIFT

(11) **EP 1 699 906 B1**
(45) Veröffentlichungstag und Bekanntmachung des Hinweises auf die Patenterteilung: **19.03.2014**
(21) Anmeldenummer: 04802952.4
(22) Anmeldetag: 13.12.2004
(51) Int. Cl.: C10J 3/54, C10J 3/06

(54) **VERFAHREN UND ANLAGE ZUR HERSTELLUNG FLÜSSIGER ENERGIETRÄGER AUS EINEM FESTEN KOHLENSTOFFTRÄGER**
METHOD AND INSTALLATION FOR PRODUCING LIQUID ENERGY CARRIERS FROM A SOLID CARBON CARRIER
PROCEDE ET INSTALLATION DE PRODUCTION DE PORTEURS D ENERGIE FLUIDES A PARTIR D UN PORTEUR D 'ENERGIE SOLIDE

(30) Priorität: 13.12.2003 DE 10358507
(43) Veröffentlichungstag der Anmeldung: 13.09.2006
(73) Patentinhaber: Schröder, Sascha, 01237 Dresden (DE); Topf, Ulrike, 01187 Dresden (DE)
(72) Erfinder: TOPF, Norbert, 01187 Dresden (DE); LIEBISCH, Günter, 01187 Dresden (DE)
(74) Vertreter: Hofmann, Klaus
(86) Internationale Anmeldenummer: PCT/DE2004/002766
(87) Internationale Veröffentlichungsnummer: WO 2005/056737

(56) Entgegenhaltungen:
- US-A1- 2002 112 403
- US-A1- 2002 134 019
- US-A1- 2004 079 087
- US-A1- 2004 182 294
- GOUSE S W ET AL: "INTEGRATION OF FOSSIL AND RENEWABLE ENERGY TECHNOLOGIES TO MITIGATE CARBON DIOXIDE" ENERGY CONVERSION AND MANAGEMENT, ELSEVIER SCIENCE PUBLISHERS, OXFORD, GB, Bd. 34, Nr. 9-11, 1993, Seiten 1023-1030, XP008020608 ISSN: 0196-8904
- HAMELINCK C N ET AL: "Future prospects for production of methanol and hydrogen from biomass" JOURNAL OF POWER SOURCES, ELSEVIER SEQUOIA S.A. LAUSANNE, CH, Bd. 111, Nr. 1, 18. September 2002 (2002-09-18), Seiten 1-22, XP004380118 ISSN: 0378-7753

## Beschreibung

### Technisches Gebiet

Die Erfindung betrifft ein Verfahren und eine Anlage zur Herstellung flüssiger Energieträger, insbesondere von Methanol, aus einem festen Kohlenstoffträger mittels Vergasung bei Zuführung von Fremdenergie und Erzeugung eines Synthesegases zur anschließenden Synthese.

Dabei ist die Erfindung insbesondere für die Anwendung in einer kompakten Anlagenkonfiguration vorgesehen. Die flüssigen Energieträger als Finalprodukte sind als Energiespeicher und für mobile oder stationäre Arbeitsaggregate bestimmt. Derartige Anlagen nutzen unter dem Hintergrund begrenzter Ressourcen, z.B. bei Erdöl, und dem in der jüngeren Zeit gestiegenen Umweltbewusstsein als Zusatzenergie Windkraft, Wasserkraft oder Solarstrom, welche erheblich an Interesse gewonnen haben.

### Stand der Technik

Nach dem Stand der Technik ist eine große Zahl von Verfahren zur Herstellung flüssiger Energieträger bekannt. Beispielsweise arbeitet der deutsche "ForschungsVerbund Sonnenenergie", eine Kooperation außeruniversitärer Forschungsinstitute, mit dem Ziel der Erforschung einer nachhaltigen Energieversorgung an neuen Technologien zur Nutzung erneuerbarer Energiequellen.

J. Pasel u.a. beschreiben in "Methanol-Herstellung und Einsatz als Energieträger für Brennstoffzellen", http://www.fv-sonnenenergie.de/publikationen/th9900/ th9900_46-53.pdf" Methoden der Methanolgewinnung. Methanol als alternativer Kraftstoff für den Verkehrsbereich bietet den Vorteil eines erheblichen Substitutionspotenzials für die heute benötigten Kraftstoffe, weil erneuerbare Ressourcen längerfristig eine tragende Rolle spielen werden. Dabei werden geschlossene Stoffkreisläufe als Grundvoraussetzung für nachhaltige Energiesysteme angegeben. U.a. können fossile Rohstoffe oder Reststoffe unter Einschaltung von Energie aus Windkraft, Wasserkraft oder Solarstrom vergast werden, wobei der erforderliche Sauerstoff für die Vergasung und Wasserstoff für die Methanol-Synthese in einer parallelen Elektrolyse erzeugt werden.

**In** GOUSE S W ET AL: "INTEGRATION OF FOSSIL AND RENEWABLE ENERGY TECHNOLOGIES TO MITIGATE CARBON DIOXIDE", ENERGY CONVERSION AND MANAGEMENT, ELSEVIER SCIENCE PUBLISHERS, OXFORD, GB, Bd. 34, Nr. 9-11, 1993, Seiten 1023-1030, XP008020608, (ISSN: 0196-8904**) wird ein Verfahren zur Herstellung eines flüssigen Energieträgers aus einem Synthesegas beschrieben, welches in einer Anlage durch Vergasung eines festen Kohlenstoffträgers erzeugt wird, die mindestens aus einem Vergasungsapparat zum Vergasen des Kohlenstoffträgers und zur Erzeugung des Synthesegase, einer Syntheseeinrichtung zur Synthese des flüssigen Energieträgers aus dem Synthesegas und einer Einrichtung zur Wasserelektrolyse zur Erzeugung von Sauerstoff als Vergasungsmittel für den Vergasungsprozess im Vergasungsapparat und Wasserstoff für den Syntheseprozess in der Syntheseeinrichtung besteht.**

**In** HAMELINCK C N ET AL: "Future prospects for production of methanol and hydrogen from biomass", JOURNAL OF POWER SOURCES, ELSEVIER SEQUOIA S.A. LAUSANNE, CH, Bd. 111, Nr. 1, 18. September 2002 (2002-09-18), Seiten 1-22, XP004380118, (ISSN: 0378-7753**) wird ein Verfahren zur Herstellung von Methanol und Wasserstoff aus Biomasse beschrieben, bei der eine Trocknungseinrichtung eingesetzt wird.**

US 2002/112403 A1 (POPE LEROY B ET AL) 22. August 2002 **(2002-08-22) beschreibt eine Anlage zur Vergasung von Biomasse mit einer Verbrennungsvorrichtung.**

**Weitere Lösungen sind beschrieben in** US 2002/134019 A1 (PAISLEY MARK A) 26. September 2002 **(2002-09-26),** US 2004/182294 A1 (HAHN HANS HELMUT ET AL) 23. September 2004 (2004-09-23**) und** US 2004/079087 A1 (CHANDRAN RAVI ET AL) 29. April 2004 (2004-04-29**).**

### Darstellung der Erfindung

Der Erfindung liegt damit als Aufgabe zugrunde, ein Verfahren zur Herstellung flüssiger Energieträger aus einem festen Kohlenstoffträger der eingangs erwähnten Art anzugeben, welches den Wirkungsgrad derartiger Verfahren wesentlich erhöht. Weiterhin soll eine Anlage zur Herstellung flüssiger Energieträger aus einem festen Kohlenstoffträger angegeben werden, die einen kompakten Aufbau aufweist und zur Herstellung von Brennstoff für den Einsatz in Arbeitsmaschinen zum Betrieb mobiler oder stationärer Arbeitsaggregate genutzt werden kann.

Als feste Kohlenstoffträger sollen insbesondere solche mit vermindertem Heizwert einsetzbar sein, d.h. fossile oder rezente Brennstoffe wie Biomasse oder Braunkohle, die durch einen deutlichen natürlichen Sauerstoffgehalt und damit einem gewissen Oxydationszustand und dadurch bedingtem Heizwertverlust gegenüber sauerstoffarmen Brennstoffen gekennzeichnet sind. So beträgt z. B. im Holz das molare Kohlenstoff-Sauerstoff-Verhältnis 1:1. Der dadurch bedingte niedrige Energieinhalt soll durch Zuführung externer Energie nichtfossilen Ursprungs und deren Speicherung als chemische Energie in den herzustellenden Energieträgern kompensiert werden, wobei die Minimierung des Bedarfs an externer Energie einen wesentlichen Aspekt der Aufgabe darstellt. Ein weiterer Aspekt der Aufgabe besteht darin, dass das Verfahren ohne wesentliche verfahrensbedingte Kohlendioxidemission arbeiten soll.

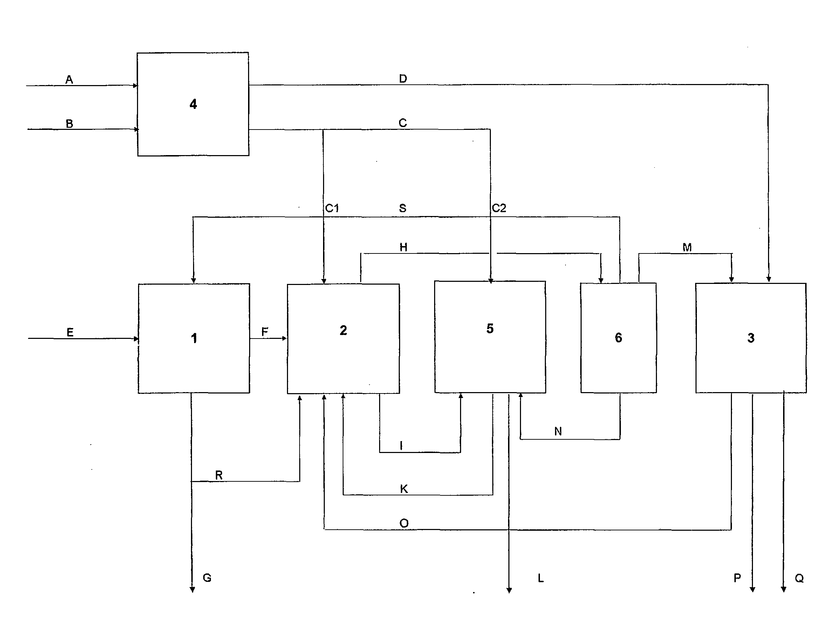

Die Erfindung löst die Aufgabe für das Verfahren durch die im Anspruch 1 angegebenen Merkmale und für die Anlage durch die Merkmale im Anspruch 10. Vorteilhafte Weiterbildungen der Erfindung sind in den jeweiligen Unteransprüchen gekennzeichnet und werden nachstehend zusammen mit der Beschreibung der bevorzugten Ausführung der Erfindung, einschließlich der Zeichnung, näher dargestellt.

Der Kern der Erfindung besteht in der Weiterentwicklung eines Verfahrens zur Herstellung eines flüssigen Energieträgers aus einem Synthesegas, in einer Kompaktanlage durch Vergasung eines festen Kohlenstoffträgers. Die Kompaktanlage besteht mindestens aus einer Trocknungseinrichtung zum Trocknen des Kohlenstoffträgers, einem Vergasungsapparat zum Vergasen des Kohlenstoffträgers und zur Erzeugung des Synthesegases, einer Syntheseeinrichtung zur Synthese des flüssigen Energieträgers aus dem Synthesegas und einer Einrichtung zur Wasserelektrolyse zur Erzeugung von Sauerstoff als Vergasungsmittel für den Vergasungsprozess im Vergasungsapparat und Wasserstoff für den Syntheseprozess in der Syntheseeinrichtung.

Verfahrensgemäß wird mindestens ein Teil des Abdampfes aus der Trocknungseinrichtung und mindestens ein Teil des bei der Synthese anfallenden Restgases dem Vergasungsprozess im Vergasungsapparat zugeführt. Der Abdampf erhöht entsprechend dem thermodynamischen Wasser-Gas-Gleichgewicht die Bildung von Wasserstoff und das Restgas, welches Wasserstoff- und Kohlenmonoxidanteile enthält, erhöht wesentlich den Wirkungsgrad des Verfahrens.

In einer Ausgestaltung werden die kohlenstoffhaltigen Rückstände aus dem Vergasungsapparat und ein Teil des in der Einrichtung zur Wasserelektrolyse erzeugten Sauerstoffs dem Verbrennungsprozess in einem Verbrennungsapparat, der dem Vergasungsapparat nachgeordnet ist, zugeführt. Das kohlendioxyd- und sauerstoffhaltige Abgas aus dem Verbrennungsapparat wird dann in vorteilhafter Weise als Vergasungsmittel dem Vergasungsprozess im Vergasungsapparat zugeführt.

Der Trocknungsprozess des Kohlenstoffträgers in der Trocknungseinrichtung zur Erzeugung eines Abdampfes, der frei von nicht kondensierenden Anteilen ist, wird entsprechend einer Ausführung im geschlossenen System und ohne Schleppluft durchgeführt.

Der Abdampf aus der Trocknungseinrichtung, der nicht dem Vergasungsprozess im Vergasungsapparat zugeführt wird, kann in einem Kondensator kondensiert und extern als Wärmespender genutzt werden.

In weiteren Ausgestaltungen kann das Synthesegas vor der Zuführung in die Syntheseeinrichtung einer Reinigung und/oder Kühlung unterzogen und die Reststoffe aus der Gasreinigung und/oder das Restgas aus der Syntheseeinrichtung, die nicht dem Vergasungsprozess im Vergasungsapparat zugeführt werden, können dem Verbrennungsprozess im Verbrennungsapparat zugeführt werden.

Die beim Vergasungsprozess und/oder der Synthese des flüssigen Energieträgers und/oder gegebenenfalls dem Verbrennungsprozess und/oder der Gasreinigung und -kühlung anfallende Abwärme wird in vorteilhafter Weise der Trocknungseinrichtung zugeführt.

Die erfindungsgemäße Kombination der einzelnen Stoffströme ist insgesamt durch eine Zuführung von Energie externer Herkunft gekennzeichnet, die das dem natürlichen Oxydationszustand des eingesetzten Kohlenstoffträgers entsprechende Energiedefizit kompensiert und als gespeicherte Energie im Endprodukt enthalten ist. Über die Rückführung der Restgase in den Produktstrom wird eine nahezu vollständige Nutzung des im eingesetzten Kohlenstoffträger enthaltenen Kohlenstoffs gewährleistet und es fällt eine deponiefähige Asche an.

Die Erzeugung der zusätzlichen Energie ist nicht Gegenstand der Erfindung. Im Sinne der Aufgabenstellung zur Schaffung eines Verfahrens zur vollständigen Ausnutzung des Kohlenstoffträgers und der weitgehenden Vermeidung einer Kohlendioxidemission sollte diese Energie jedoch nicht aus der Verbrennung fossiler oder rezenter Brennstoffe stammen.

Soweit es für die Erfindung relevant ist, werden nachfolgend noch kurz die einzelnen Verfahrensschritte näher erläutert.

Die Trocknung und Aufbereitung des Kohlenstoffträgers dient der Erhöhung des Heizwertes, da dieser im Urzustand in der Regel mit einem hohen Wassergehalt und damit niedrigem Heizwert zur Verfügung steht, und es können prinzipiell alle bekannten Trocknungsverfahren eingesetzt werden. Der Grad der Trocknung wird in Abhängigkeit von der Elementarzusammensetzung des Kohlenstoffträgers und damit seines Energiegehaltes so gewählt, dass die nachfolgende Vergasung autotherm aufrecht erhalten werden kann. Je nach Art des eingesetzten festen Kohlenstoffträgers kann zumindest ein Teil der für die Trocknung erforderlichen Wärmeenergie auch aus dem Vergasungsprozess auch ausgekoppelt werden.

In der Ausführung der Erfindung mit nachgeordnetem Verbrennungsapparat wird der aus dem Vergasungsapparat ausgetragene kohlenstoffhaltige feste Vergasungsrückstand unter Zuführung von Sauerstoff zu einem aus Kohlendioxid und überschüssigem Sauerstoff bestehenden Gas umgesetzt. Während im Vergasungsprozess eine reduzierende Atmosphäre vorherrscht, ist der Verbrennungsprozess von einer oxydierenden Atmosphäre gekennzeichnet.

Mit der Wasserelektrolyse zur Herstellung von Wasserstoff und Sauerstoff fließt Elektroenergie externer Herkunft in das Verfahren ein. Die zuzuführende externe Energie kompensiert das Energiedefizit des sauerstoffhaltigen Kohlenstoffträgers und wird letztendlich in einen Energiegehalt des flüssigen Energieträgers umgewandelt und somit in eine speicherbare Form überführt. Das bedeutet, dass mit diesem Verfahren prinzipiell auch Kohlenstoffträger mit höherem Heizwert, z.B. Steinkohle, in flüssige Energieträger unter Speicherung der externen Energie in den herzustellenden flüssigen Produkten verarbeitet werden können.

Bei der Gasreinigung und -kühlung wird das erzeugte Rohgas abgekühlt und auf die für die Synthese erforderliche Reinheit gebracht. Der Kühlung des erzeugten Rohgases wird insofern besondere Aufmerksamkeit gewidmet, da die Zusammensetzung auf Grund des Boudouard-Gleichgewichts temperaturabhängig ist, d.h. bei langsamer Abkühlung wandelt sich das im Gas enthaltene Kohlenmonoxid unter Abscheidung von Kohlenstoff zunehmend in Kohlendioxid um.

In vorteilhafter Weise wird deshalb in der erfindungsgemäßen Anlage eine Kühlung in einem Wirbelschichtapparat bevorzugt. In diesem Wirbelschichtapparat befindet sich ein inertes Wirbelmaterial, das durch das zu kühlende Gas fluidisiert wird. Auf Grund des quasiflüssigen Zustandes einer Wirbelschicht besitzt diese eine nahezu einheitliche Temperatur. Wenn das heiße Gas aus der Vergasung der deutlich kühleren Wirbelschicht zugeführt wird, erfolgt eine schockartige Abkühlung, wodurch die unerwünschte Kohlenmonoxidumsetzung vermieden wird.

In dem Wirbelschichtapparat ist ein Wärmeübertrager in Form eines Rohr-, Platten- oder anderen Registers integriert, in dessen Inneren sich siedendes Wasser mit einem in gewissen Grenzen frei wählbaren Druck befindet, so dass die aus dem heißen Gas abgeführte Wärme in die entsprechende Menge Wasserdampf umgewandelt wird. Auf Grund des hohen Wärmeübergangskoeffizienten in der Wirbelschicht gegenüber einem konventionellen Gaskühler kann die erforderliche Wärmeübertragerfläche um 70 bis 80 % reduziert werden. Der Wirbelschichtapparat fungiert also gleichzeitig als Dampferzeuger, in dem zumindest ein Teil des für die Trocknung des Kohlenstoffträgers erforderlichen Heizdampfes erzeugt wird.

Der Wirbelschichtapparat arbeitet zusätzlich auch als Gasreinigungsstufe. Durch die Abkühlung scheiden sich die im Rohgas enthaltenen Teer- und gegebenenfalls Staubanteile auf dem inerten Wirbelmaterial ab. Eine Regenerierung des beladenen Wirbelmaterials erfolgt entweder durch kontinuierliche oder periodische Entnahme eines Teilstromes, Abbrennen des Belages und Rückführung in den Wirbelschichtkühler. Vorteilhafterweise erfolgt diese Regenerierung des inerten Wirbelmaterials im Zusammenhang mit der Verbrennung des kohlenstoffhaltigen Rückstandes aus der Vergasung, wodurch eine Abgasemission vermieden und der Kohlenstoffanteil genutzt wird. Anschließend kann eine weitere Kühlung konventioneller Art und eine Gasfeinreinigung entsprechend den Anforderungen des Verfahrensschrittes Synthese erfolgen.

Bei der Synthese wird das bei der Vergasung erzeugte und nachfolgend konditionierte Rohgas in einen flüssigen Energieträger umgewandelt. Dabei kann es sich je nach Bedarf um eine an sich bekannte Kohlenwasserstoffsynthese, z. B. nach Fischer-Tropsch, eine Methanolsynthese oder eine andere Synthese, z. B. eine Isobutylölsynthese, handeln. Da das für diese Synthesen erforderliche Verhältnis von Kohlenmonoxid und Wasserstoff im Rohgas aus der Vergasung bei Verzicht auf eine Kohlenmonoxidkonvertierung nicht eingehalten wird, sondern ein Überschuss an Kohlenmonoxid besteht, wird durch die Zugabe des Wasserstoffs aus der Wasserelektrolyse der Wasserstoffbedarf gedeckt und auf das für die Synthese erforderliche Kohlenmonoxid-Wasserstoff-Verhältnis eingestellt.

Die genannten an sich bekannten Synthesen verlaufen auf Grund der herrschenden thermodynamischen Gesetzmäßigkeit nicht vollständig in Richtung des gewählten Zielproduktes. Es verbleibt ein Restgas, dass neben geringen nicht umgesetzten Wasserstoff- und Kohlenmonoxidanteilen auch noch einen thermodynamisch bedingten Kohlendioxidanteil aus der Vergasung und Inertgasanteile aus dem Kohlenstoffträger enthält.

Die erfindungsgemäße Anlage zur Herstellung eines flüssigen Energieträgers aus einem Synthesegas besteht aus mindestens einer Trocknungseinrichtung zum Trocknen des Kohlenstoffträgers, einem Vergasungsapparat zum Vergasen des Kohlenstoffträgers, einer Syntheseeinrichtung zur Synthese des flüssigen Energieträgers aus dem Synthesegas und einer Einrichtung zur Wasserelektrolyse zur Erzeugung von Sauerstoff als Vergasungsmittel für den Vergasungsprozess im Vergasungsapparat und Wasserstoff für den Syntheseprozess in der Syntheseeinrichtung sowie einem Verbrennungsapparat, der mit dem Ausgang für kohlenstoffhaltige Vergasungsrückstände aus dem Vergasungsapparat und dem Sauerstoffausgang der Einrichtung zur Wasserelektrolyse verbunden ist.

Der Ausgang des Abdampfes aus der Trocknungseinrichtung und der Ausgang für Syntheserestgas aus der Syntheseeinrichtung sind in einer Weiterbildung mit dem Vergasungsapparat verbunden. Damit kann Abdampf und Syntheserestgas in den Vergasungsprozess eingeschleust werden. In diese Verbindung ist regelmäßig auch mindestens eine Einrichtung zur Regelung der Menge des Abdampfes und/oder des Restgases vorhanden.

Weiterhin kann zwischen dem Vergasungsapparat und/oder der Syntheseeinrichtung und/oder dem Verbrennungsapparat mindestens eine Einrichtung zur Gasreinigung und/oder -kühlung vorhanden sein. Die Einrichtung zur Gasreinigung und/oder -kühlung kann als Wirbelschichtapparat mit integrierter Wasserdampferzeugung ausgebildet und der Ausgang des Wasserdampfes mit einem Eingang für Heizdampf an der Trocknungseinrichtung verbunden sein.

Mit einer Abwärme-Sammeleinrichtung kann die Abwärme am Vergasungsapparat und/oder der Syntheseeinrichtung und/oder dem Verbrennungsapparat gesammelt und der Trocknungseinrichtung zugeführt werden.

Der Vorteil der Erfindung besteht insbesondere darin, dass der Elektroenergiebedarf, gemessen an dem Energieinhalt des hergestellten flüssigen Energieträgers, z.B. im Fall der Methanolherstellung, von nahezu 100 % auf unter 50 %, bezogen auf den Energieinhalt des hergestellten Methanols, gesenkt werden kann.

Dabei wurde gefunden, dass durch eine kombinierte Steuerung der Zuführung des Restgases aus der Synthese und des Abdampfes aus der Trocknung des Kohlenstoffträgers das Gesamtverfahren in einem weitgehend geschlossenen System realisiert werden kann. Der Bedarf an Sauerstoff für die Vergasung und der Bedarf an Wasserstoff für die Konditionierung des Rohgases zur Synthese kann so gesteuert werden, dass das Volumenverhältnis praktisch 1:2 beträgt und somit dem Bildungsverhältnis bei der Wasserelektrolyse entspricht. Damit fallen aus der Elektrolyse keine Überschussmengen an Sauerstoff an.

In vorteilhafter Weise kann die Bereitstellung der Elektroenergie aus sich spontan ändernden natürlichen Ressourcen mit klassisch erzeugter Elektroenergie kombiniert werden, wobei immer das Maximum von Energie aus Windkraft, Wasserkraft oder Solarstrom eingesetzt wird.

Weitere Vorteile sind die Minimierung des CO₂-Austoßes sowie die weitgehend schadstofffreien Reststoffe in Form neutraler Asche.

### Ausführungsbeispiel

Die Erfindung wird nachstehend an einem Ausführungsbeispiel näher erläutert. Die zugehörige Zeichnung zeigt ein Schema einer Anlage zur Herstellung eines flüssigen Energieträgers aus einem festen Kohlenstoffträger, einschließlich der erfindungsgemäßen Stoffströme.

Die Anlage umfasst als Trocknungseinrichtung zum Trocknen des Kohlenstoffträgers einen Dampfwirbelschichttrockner 1, als Vergasungsapparat zum Vergasen des Kohlenstoffträgers und zur Erzeugung des Synthesegases einen Wirbelschichtvergaser 2, zur Synthese des flüssigen Energieträgers aus dem Synthesegas eine Syntheseeinrichtung 3 und einer Einrichtung zur Wasserelektrolyse 4. In der spezifischen Anlage ist weiterhin eine Wirbelschichtverbrennungsanlage 5 als Verbrennungsapparat sowie ein Wirbelschichtkühler 6 als Einrichtung zur Gasreinigung und -kühlung vorhanden.

Alle Baugruppen sind in einer Kompaktanlage kombiniert und über entsprechende Stoffleitungen miteinander verbunden. Die einzelnen Stoffströme werden nachfolgend mit der Beschreibung des erfindungsgemäßen Verfahrens näher erläutert.

Beispielhaft werden als Kohlenstoffträger 4.115 kg/h mechanisch aufbereitete Rohbraunkohle E mit einem Heizwert gleich 9.605 kJ/kg und einem Wassergehalt von 55 Masse-% dem Dampfwirbelschichttrockner 1 zugeführt und dort zu 2.184 kg/h Trockenbraunkohle F mit einem Restwassergehalt von 15,2 Masse-% und einem Heizwert von 20.250 kJ/kg getrocknet.

Für die Trocknung ist ein Wärmebedarf von 1.831 kW erforderlich. Diese Wärme wird innerhalb der Anlage an anderen Baugruppen gewonnen und dem Trocknungsprozess zugeführt. Im Beispiel wird der im Wirbelschichtkühler 6 als Einrichtung zur Gasreinigung und -kühlung erzeugte Heizdampf S genutzt.

Unter den beispielhaften Bedingungen entstehen bei der Trocknung 1.931 kg/h Dampf. Von dieser Gesamtmenge werden in einem ersten Teilstrom R erfindungsgemäß 1.046 kg/h dem Wirbelschichtvergaser 2 zugeführt. Ein zweiter Teilstrom G mit 885 kg/h wird einem Abdampfkondensator zugeführt, wobei die dort frei werdende Kondensationswärme von 557 kW als Niedertemperaturwärme einer externen Nutzung zugeführt werden kann.

Parallel zur Bereitstellung des aufbereiteten festen Kohlenstoffträgers sowie Abdampf aus der Trocknung für den Vergasungsprozess werden in der Einrichtung zur Wasserelektrolyse 4 aus Wasser A und zugeführter fremder Elektroenergie B 799 kg/h Sauerstoff und 115 kg/h Wasserstoff erzeugt. Der Elektroenergiebedarf dafür beträgt 4,77 MW. Entsprechend dem Anliegen des Verfahrens wird diese Energie vorzugsweise aus Wasser-, Wind- oder Sonnenenergieanlagen gewonnen.

Etwa ein Drittel des elektrolytisch erzeugten Sauerstoffs C wird über den Stoffstrom C1 dem Wirbelschichtvergaser 2 zugeführt und zwei Drittel über den Stoffstrom C2 der Wirbelschichtverbrennungsanlage 5. Die Verwendung des Wasserstoffs über den Stoffstrom D wird später erläutert.

Im Wirbelschichtvergaser 2 wird die Trockenbraunkohle F unter Zuführung des Sauerstoffs über den Stoffstrom C1 ein Rohgas H erzeugt, wobei erfindungsgemäß weiterhin die Stoffströme Dampf über den Teilstrom R und ein Gemisch K aus Kohlendioxid und Sauerstoff aus der Wirbelschichtverbrennungsanlage 5 sowie ein Syntheserestgas O, in dem restliche Anteile an Kohlenmonoxid und Wasserstoff aus der Syntheseeinrichtung 3 enthalten sind, einfließen. Die Vergasung wird bei einer mittleren Vergasungstemperatur von 630 °C durchgeführt. Das Syntheserestgas O wird in einer Menge von 2.369 kg/h zugeführt.

Im Beispiel werden nach der Reinigung des Rohgases H letztendlich 5.658 kg/h Reingas M mit 27,5 Vol.-% Kohlenmonoxid und 35,0 Vol.-% Wasserstoff erzeugt. Der Rest besteht im Wesentlichen aus Kohlendioxid und geringen Mengen Wasserdampf und Methan.

Der kohlenstoffhaltige Vergasungsrückstand I aus dem Wirbelschichtvergaser 2 und Sauerstoff über den Stoffstrom C2 werden der Wirbelschichtverbrennungsanlage 5 zugeführt und dort unter oxydierender Atmosphäre zu einem Gemisch K aus Kohlendioxid und Sauerstoff umgesetzt. Dieses Gasgemisch K wird, wie bereits erwähnt, dem Vergasungsprozess im Wirbelschichtvergaser 2 zugeführt. Die Stoffströme werden dabei so geregelt, dass eine Verbrennungstemperatur von etwa 900 °C aufrecht erhalten wird.

Als Abfallprodukt des Verbrennungsprozesses verbleibt lediglich die Asche L, die frei von Calciumsulfid ist und infolgedessen bei Feuchtigkeitseinwirkung nicht zur Schwefelwasserstoffentwicklung neigt. Die Asche L kann deshalb problemlos deponiert werden.

Das Rohgas H wird im Wirbelschichtkühler 6 gereinigt und gekühlt. Im Wirbelschichtkühler 6 ist ein inertes Wirbelmaterial vorhanden, das durch das Rohgas in einem Wirbelzustand gehalten wird. In die Wirbelschicht taucht ein Rohrwärmeübertrager mit einer Wärmeübertragerfläche von ca. 200 m², in dessen Rohren sich im Betriebszustand siedendes Wasser von 191 °C und 12,6 bar befindet. Dem Rohgas H wird die nutzbare Wärme entzogen und ein Wasserdampfstrom mit den gleichen Parametern erzeugt, der wie erwähnt als Heizdampf S dem Dampfwirbelschichttrockner 1 zugeführt wird. Die Wirbel-schichtkühlung wirkt gleichzeitig als Gasreinigung, da bei der Abkühlung des Gases von 630 °C auf 230 °C die konden-sierenden Teerbestandteile und im rohen Gas enthaltener Staub auf dem inerten Wirbelmaterial niedergeschlagen werden. Das Wirbelmaterial mit den Rückständen aus der Gasreinigung N kann zur Regenerierung der Wirbelschichtverbrennungsanlage 5 zugeführt werden.

Soweit das gekühlte Synthesegas M noch nicht den Erfordernissen der nachfolgenden Methanolsynthese entspricht, insbesondere Einhaltung der Grenzwerte für die Katalysatorbelastung, können geeignete Maßnahmen entsprechend dem Stand der Technik getroffen werden.

In der Syntheseeinrichtung 3 wird dann das Synthesegas M unter Einhaltung des für die Synthese von Methanol erforderlichen Volumenverhältnisses Wasserstoff : Kohlenmonoxid im Reingas von rund 2,05 durch Zuführung des Wasserstoffs über den Stoffstrom D aus der Einrichtung Wasserelektrolyse 4 gewährleistet. Im Syntheseprozess entstehen im Wesentlichen Methanol und einige Nebenprodukte wie Dimethylether und höhere Alkohole, die im Zielprodukt Rohmethanol Q verbleiben können.

Im Syntheseprozess fällt noch ein Syntheserestgas O an, in dem restliche Anteile an Kohlenmonoxid und Wasserstoff und auch das im Synthesegas vorhandene Kohlendioxid sowie Bestandteile von Inertgas enthalten sind. Das Syntheserestgas O wird, wie bereits erläutert, in einer Menge von 2.369 kg/h dem Wirbelschichtvergaser 2 zugeführt. Ein Teilstrom des Restgases in einer Menge von 1.276 kg/h wird als Ausschleusgas P aus dem System entfernt, um eine Anreicherung der inerten Gasbestandteile zu vermeiden.

Insgesamt wird im Ergebnis des Syntheseprozesses aus 4.115 kg/h mechanisch aufbereitete Rohbraunkohle E ein Rohmethanol Q in der Menge von 1.931 kg/h mit einer chemisch gebundenen Leistung von 10.647 kW erzeugt. Bezogen auf die für die Elektrolyse aufzuwendende Leistung sind das 223 %.

### Liste der verwendeten Bezugszeichen

- 1: Dampfwirbelschichttrockner
- 2: Wirbelschichtvergaser
- 3: Syntheseeinrichtung
- 4: Einrichtung zur Wasserelektrolyse
- 5: Wirbelschichtverbrennungsanlage
- 6: Wirbelschichtkühler

### Kennzeichnung der Stoffströme

- A: Wasser
- B: Elektroenergie
- C: Sauerstoff
- C1: Sauerstoff erster Stoffstrom
- C2: Sauerstoff zweiter Stoffstrom
- D: Wasserstoff
- E: Rohbraunkohle
- F: Trockenbraunkohle
- G: Abdampf Teilstrom
- H: Rohgas
- I: Vergasungsrückstand
- K: Gasgemisch
- L: Asche
- M: Reingas
- N: Rückstände der Gasreinigung
- O: Syntheserestgas
- P: Ausschleusgas
- Q: Rohmethanol
- R: Abdampf Teilstrom
- S: Heizdampf

## Patentansprüche

1. Verfahren zur Herstellung eines flüssigen Energieträgers aus einem Synthesegas, welches in einer Anlage durch Vergasung eines festen Kohlenstoffträgers (E) erzeugt wird, die mindestens aus einer Trocknungseinrichtung (1) zum Trocknen des Kohlenstoffträgers (E), einem Vergasungsapparat (2) zum Vergasen des Kohlenstoffträgers und zur Erzeugung des Synthesegases (H), einer Syntheseeinrichtung(3) zur Synthese des flüssigen Energieträgers (Q) aus dem Synthesegas (M) und einer Einrichtung zur Wasserelektrolyse(4) zur Erzeugung von Sauerstoff(C) als Vergasungsmittel für den Vergasungsprozess im Vergasungsapparat und Wasserstoff(D) für den Syntheseprozess in der Syntheseeinrichtung(3) besteht, **dadurch gekennzeichnet, dass** mindestens ein Teil des Abdampfes(R) aus der Trocknungseinrichtung (1) und mindestens ein Teil des bei der Synthese anfallenden Restgases(O) dem Vergasungsprozess im Vergasungsapparat (2) zugeführt werden.

2. Verfahren nach Anspruch 1, **dadurch gekennzeichnet, dass** kohlenstoffhaltige Rückstände aus dem Vergasungsapparat und ein Teil des in der Einrichtung zur Wasserelektrolyse(4) erzeugten Sauerstoffs(C2) dem Verbrennungsprozess in einem Verbrennungsapparat innerhalb der Kompaktanlage zugeführt werden.

3. Verfahren nach Anspruch 1 oder 2, **dadurch gekennzeichnet, dass** als fester Kohlenstoffträger ein solcher mit vermindertem Heizwert ausgewählt wird, der entsprechend seiner Ausgangsstruktur vor der Einbringung in der Trocknungseinrichtung im erforderlichen Umfang konditioniert wird.

4. Verfahren nach Anspruch 2, **dadurch gekennzeichnet, dass** das kohlendioxyd- und sauerstoffhaltige Abgas aus dem Verbrennungsapparat als Vergasungsmittel dem Vergasungsapparat zugeführt wird.

5. Verfahren nach einem der Ansprüche 1 bis 4, **dadurch gekennzeichnet, dass** der Trocknungsprozess des Kohlenstoffträgers in der Trocknungseinrichtung zur Erzeugung eines Abdampfes (R), der frei von nicht kondensierenden Anteilen ist, im geschlossenen System und ohne Schleppluft durchgeführt wird.

6. Verfahren nach einem der Ansprüche 1 bis 5, **dadurch gekennzeichnet, dass** der Abdampf (G) aus der Trocknungseinrichtung, der nicht dem Vergasungsprozess im Vergasungsapparat zugeführt wird, in einem Kondensator kondensiert wird.

7. Verfahren nach einem der Ansprüche 1 bis 6, **dadurch gekennzeichnet, dass** das Synthesegas vor der Zuführung in die Syntheseeinrichtung (3) einer Reinigung und/oder Kühlung unterzogen wird.

8. Verfahren nach einem der Ansprüche 2 bis 7, **dadurch gekennzeichnet, dass** Reststoffe aus der Gasreinigung und/oder Restgas aus der Syntheseeinrichtung(3), das nicht dem Vergasungsprozess im Vergasungsapparat zugeführt wird, dem Verbrennungsprozess im Verbrennungsapparat zugeführt wird bzw. werden.

9. Verfahren nach einem der Ansprüche 1 bis 8, **dadurch gekennzeichnet, dass** die beim Vergasungsprozess und/od er der Synthese des flüssigen Energieträgers und/oder gegebenenfalls dem Verbrennungsprozess und/oder der Gasreinigung und -kühlung anfallende Abwärme der Trocknungseinrichtung zugeführt wird.

10. Anlage zur Herstellung eines flüssigen Energieträgers aus einem Synthesegas, welches durch Vergasung eines festen Kohlenstoffträgers erzeugt wird, bestehend aus mindestens einer Trocknungseinrichtung zum Trocknen des Kohlenstoffträgers, einem Vergasungsapparat zum Vergasen des Kohlenstoffträgers, einer Synthese-einrichtung (3) zur Synthese des flüssigen Energieträ-gers aus dem Synthesegas und einer Einrichtung zur Wasserelektrolyse (4) zur Erzeugung von Sauerstoff(C) als Vergasungsmittel für den Vergasungsprozess im Vergasungsapparat und Wasserstoff (D) für den Syntheseprozess in der Syntheseeinrichtung (3), **dadurch gekennzeichnet, dass** ein Verbrennungsapparat vorhan-den ist, der mit dem Ausgang aus dem Vergasungsapparat für kohlenstoffhaltige Vergasungsrückstände(I) und dem Sauerstoffausgang der Einrichtung zur Wasserelektrolyse (4) verbunden ist ***und der Ausgang des Abdampfes (R) aus der Trocknungseinrichtung und der Ausgang für Syntheserestgas (O) aus der Syntheseeinrichtung (3) mit dem Vergasungsapparat verbunden sind.***

11. Anlage nach Anspruch 10, **dadurch gekennzeichnet, dass** der Vergasungsapparat mit dem Auslass für ein Syntheserestgas (O) an der Syntheseeinrichtung (3) verbunden ist.

12. Anlage nach Anspruch 10 oder 11, **dadurch gekennzeichnet, dass** zwischen dem Vergasungsapparat und/oder der Syntheseeinrichtung (3) und/oder dem Verbrennungsapparat eine Einrichtung zur Gasreinigung und/oder -kühlung vorhanden ist.

13. Anlage nach einem der Ansprüche 10 bis 12, **dadurch gekennzeichnet, dass** mindestens eine Einrichtung zur Gasreinigung und/oder -kühlung als Wirbelschichtapparat mit integrierter Wasserdampferzeugung ausgebildet und der Ausgang des Wasserdampfes mit einem Eingang für Heizdampf (S) an der Trocknungseinrichtung verbunden ist.

14. Anlage nach einem der Ansprüche 10 bis 13, **dadurch gekennzeichnet, dass** eine Abwärme-Sammeleinrichtung vorhanden ist, **in der** die Abwärme am Vergasungsapparat und/oder der Syntheseeinrichtung (3) und/oder dem Verbrennungsapparat sammel**bar** und der Trocknungseinrichtung zuführ**bar sind.**

15. Anlage nach einem der Ansprüche 10 bis 14, **dadurch gekennzeichnet, dass** der Ausgang des Abdampfes (R) aus der Trocknungseinrichtung und der Ausgang des Restgases aus der Syntheseeinrichtung (3) mit dem Vergasungsapparat verbunden ist und in dieser Verbindung eine Einrichtung zur Regelung der Menge des Abdampfes und/oder des Restgases vorhanden ist.

## Claims

1. Process for producing a liquid energy carrier from a synthesis gas which is produced by gasification of a solid carbon carrier (E) in a plant which comprises at least a drying apparatus (1) for drying the carbon carrier (E), a gasification apparatus (2) for gasifying the carbon carrier and for producing the synthesis gas (H), a synthesis apparatus (3) for the synthesis of the liquid energy carrier (Q) from the synthesis gas (M) and an apparatus for the electrolysis of water (4) for producing oxygen (C) as gasification agent for the gasification process in the gasification apparatus and hydrogen (D) for the synthesis process in the synthesis apparatus (3), **characterized in that** at least part of the off-vapor (R) from the drying apparatus (1) and at least part of the residual gas (O) obtained in the synthesis is fed to the gasification process in the gasification apparatus (2).

2. Process according to Claim 1, **characterized in that** carbon-containing residues from the gasification apparatus and part of the oxygen (C2) produced in the apparatus for the electrolysis of water (4) are fed to the combustion process in a combustion apparatus within the compact plant.

3. Process according to Claim 1 or 2, **characterized in that** the solid carbon carrier selected is one which has a reduced heating value and is, in accordance with its starting structure, conditioned to the required extent before introduction into the drying apparatus.

4. Process according to Claim 2, **characterized in that** the CO₂- and oxygen-containing offgas from the combustion apparatus is fed as gasification agent to the gasification apparatus.

5. Process according to any of Claims 1 to 4, **characterized in that** the drying process for the carbon carrier in the drying apparatus for producing an off-vapor (R) which is free of incondensable components is carried out in a closed system and without entraining air.

6. Process according to any of Claims 1 to 5, **characterized in that** the off-vapor (G) from the drying apparatus which is not fed to the gasification process in the gasification apparatus is condensed in a condenser.

7. Process according to any of Claims 1 to 6, **characterized in that** the synthesis gas is subjected to purification and/or cooling before introduction into the synthesis apparatus (3).

8. Process according to any of Claims 2 to 7, **characterized in that** residues from the gas purification and/or residual gas from the synthesis apparatus (3) which is not fed to the gasification process in the gasification apparatus are/is fed to the combustion process in the combustion apparatus.

9. Process according to any of Claims 1 to 8, **characterized in that** the waste heat obtained in the gasification process and/or the synthesis of the liquid energy carrier and/or, if appropriate, the combustion process and/or the gas purification and cooling is introduced into the drying apparatus.

10. Plant for producing a liquid energy carrier from a synthesis gas which is produced by gasification of a solid carbon carrier, which comprises at least a drying apparatus for drying the carbon carrier, a gasification apparatus for gasifying the carbon carrier, a synthesis apparatus (3) for the synthesis of the liquid energy carrier from the synthesis gas and an apparatus for the electrolysis of water (4) for producing oxygen (C) as gasification agent for the gasification process in the gasification apparatus and hydrogen (D) for the synthesis process in the synthesis apparatus (3), **characterized in that** a combustion apparatus which is connected to the outlet for carbon-containing gasification residues (I) from the gasification apparatus and the oxygen outlet of the apparatus for the electrolysis of water (4) is present and the outlet for the off-vapor (R) from the drying apparatus and the outlet for residual gas (O) from the synthesis apparatus (3) are connected to the gasification apparatus.

11. Plant according to Claim 10, **characterized in that** the gasification apparatus is connected to the outlet for a residual gas (O) from the synthesis on the synthesis apparatus (3).

12. Plant according to Claim 10 or 11, **characterized in that** an apparatus for gas purification and/or cooling is present between the gasification apparatus and/or the synthesis apparatus (3) and/or the combustion apparatus.

13. Plant according to any of Claims 10 to 12, **characterized in that** at least one apparatus for gas purification and/or cooling is configured as a fluidized-bed apparatus with integrated steam generation and the outlet for the steam (S) is connected to an inlet for heating steam on the drying apparatus.

14. Plant according to any of Claims 10 to 13, **characterized in that** a waste heat collection apparatus in which the waste heat from the gasification apparatus and/or the synthesis apparatus (3) and/or the combustion apparatus can be collected and can be passed to the drying apparatus is present.

15. Plant according to any of Claims 10 to 14, **characterized in that** the outlet for the off-vapor (R) from the drying apparatus and the outlet for the residual gas from the synthesis apparatus (3) is connected to the gasification apparatus and a device for regulating the amount of off-vapor and/or residual gas is present in this connection.

## Revendications

1. Procédé de production d'un porteur d'énergie liquide à partir d'un gaz de synthèse, qui est produit dans une installation par gazéification d'un porteur de carbone solide (E), laquelle se compose au moins d'un dispositif de séchage (1) pour le séchage du porteur de carbone (E), d'un appareil de gazéification (2) pour la gazéification du porteur de carbone et pour la production du gaz de synthèse (H), d'un dispositif de synthèse (3) pour la synthèse du porteur d'énergie liquide (Q) à partir du gaz de synthèse (M) et d'un dispositif pour l'électrolyse aqueuse (4) pour la production d'oxygène (C) comme agent de gazéification pour le processus de gazéification dans l'appareil de gazéification et d'hydrogène (D) pour le processus de synthèse dans le dispositif de synthèse (3), **caractérisé en ce que** l'on fournit au processus de gazéification dans l'appareil de gazéification (2) au moins une partie de la vapeur d'échappement (R) provenant du dispositif de séchage (1) et au moins une partie du gaz résiduel (O) formé lors de la synthèse.

2. Procédé selon la revendication 1, **caractérisé en ce que** l'on fournit des résidus carbonés provenant de l'appareil de gazéification et une partie de l'oxygène (C2) produit dans le dispositif pour l'électrolyse aqueuse (4) au processus de combustion dans un appareil de combustion à l'intérieur de l'installation compacte.

3. Procédé selon la revendication 1 ou 2, **caractérisé en ce que** l'on choisit comme porteur de carbone solide un de ceux-ci présentant un pouvoir calorifique réduit, qui est conditionné dans la mesure nécessaire en fonction de sa structure initiale avant son introduction dans le dispositif de séchage.

4. Procédé selon la revendication 2, **caractérisé en ce que** l'on fournit le gaz d'échappement contenant du dioxyde de carbone et de l'oxygène provenant de l'appareil de combustion comme agent de gazéification à l'appareil de gazéification.

5. Procédé selon l'une quelconque des revendications 1 à 4, **caractérisé en ce que** l'on exécute le processus de séchage du porteur de carbone dans le dispositif de séchage, dans le système fermé et sans entraînement d'air, pour la production d'une vapeur d'échappement (R) qui est exempte de parties non condensées.

6. Procédé selon l'une quelconque des revendications 1 à 5, **caractérisé en ce que** l'on condense dans un condenseur la vapeur d'échappement (G) provenant du dispositif de séchage, qui n'est pas fournie au processus de gazéification dans l'appareil de gazéification.

7. Procédé selon l'une quelconque des revendications 1 à 6, **caractérisé en ce que** l'on soumet le gaz de synthèse à un nettoyage et/ou à un refroidissement avant de l'envoyer dans le dispositif de synthèse (3).

8. Procédé selon l'une quelconque des revendications 2 à 7, **caractérisé en ce que** l'on fournit au processus de combustion dans l'appareil de combustion des matières résiduelles provenant du nettoyage du gaz et/ou du gaz résiduel provenant du dispositif de synthèse (3), qui n'est pas fourni au processus de gazéification dans l'appareil de gazéification.

9. Procédé selon l'une quelconque des revendications 1 à 8, **caractérisé en ce que** l'on fournit au dispositif de séchage la chaleur perdue produite lors du processus de gazéification et/ou lors de la synthèse du porteur d'énergie liquide et/ou éventuellement lors du processus de combustion et/ou lors du nettoyage et du refroidissement du gaz.

10. Installation de production d'un porteur d'énergie liquide à partir d'un gaz de synthèse, qui est produit par gazéification d'un porteur de carbone solide, se composant d'au moins un dispositif de séchage pour le séchage du porteur de carbone, d'un appareil de gazéification pour la gazéification du porteur de carbone, d'un dispositif de synthèse (3) pour la synthèse du porteur d'énergie liquide à partir du gaz de synthèse et d'un dispositif pour l'électrolyse aqueuse (4) pour la production d'oxygène (C) comme agent de gazéification pour le processus de gazéification dans l'appareil de gazéification et d'hydrogène (D) pour le processus de synthèse dans le dispositif de synthèse (3), **caractérisée en ce qu'**il se trouve un appareil de combustion, qui est raccordé à la sortie de l'appareil de gazéification pour des résidus carbonés de la gazéification (I) et à la sortie d'oxygène du dispositif pour l'électrolyse aqueuse (4), et la sortie de la vapeur d'échappement (R) hors du dispositif de séchage et la sortie pour le gaz résiduel de synthèse (O) hors du dispositif de synthèse (3) sont raccordées à l'appareil de gazéification.

11. Installation selon la revendication 10, **caractérisée en ce que** l'appareil de gazéification est raccordé à la sortie d'un gaz résiduel de synthèse (O) au dispositif de synthèse (3).

12. Installation selon la revendication 10 ou 11, **caractérisée en ce qu'**il se trouve, entre l'appareil de gazéification et/ou le dispositif de synthèse (3) et/ou l'appareil de combustion, un dispositif pour le nettoyage et/ou le refroidissement du gaz.

13. Installation selon l'une quelconque des revendications 10 à 12, **caractérisée en ce qu'**au moins un dispositif pour le nettoyage et/ou le refroidissement du gaz est réalisé sous la forme d'un appareil à lit fluidisé avec une production de vapeur d'eau intégrée et la sortie de la vapeur d'eau est raccordée à une entrée pour la vapeur de chauffage (S) au dispositif de séchage.

14. Installation selon l'une quelconque des revendications 10 à 13, **caractérisée en ce qu'**il se trouve un dispositif de collecte de chaleur perdue, dans laquelle la chaleur perdue peut être collectée à l'appareil de gazéification et/ou au dispositif de synthèse (3) et/ou à l'appareil de combustion et fournie au dispositif de séchage.

15. Installation selon l'une quelconque des revendications 10 à 14, **caractérisée en ce que** la sortie de la vapeur d'échappement (R) hors du dispositif de séchage et la sortie du gaz résiduel hors du dispositif de synthèse (3) est raccordée à l'appareil de gazéification et un dispositif pour la régulation du débit de la vapeur d'échappement et/ou du gaz résiduel est disposé dans ce raccordement.
